# DEMANDE DE BREVET EUROPEEN

(11) **EP 0 759 404 A1**
(43) Date de publication de la demande: **26.02.1997**
(21) Numéro de dépôt: 96401804.8
(22) Date de dépôt: 22.08.1996
(51) Int. Cl.: B65G 5/00

(54) **Dispositif de sécurité de réservoirs par formation de joint hydraulique**

(30) Priorité: 23.08.1995 FR 9510020
(71) Demandeur: Société Française de Stockage Géologique "GEOSTOCK" (Société à responsabilité limitée), F-92563 Rueil-Malmaison Cédex (FR)
(72) Inventeur: Kleinenberg, René, 78450 Chavenay (FR); Chauvallon, Frank, 75010 Paris (FR)
(74) Mandataire: Pinguet, André

(57) **Abrégé**

Dispositif de sécurité pour réservoirs souterrains naturels ou creusés contenant un produit gazeux ou liquide maintenu sous une pression déterminée, ledit réservoir étant situé à ur profondeur telle que ladite pression déterminée peut être équilibrée par une certain hauteur d'eau, ledit réservoir communiquant avec la surface par au moins une colone d'exploitation présentant une extrémité inférieure (81) s'étendant dans le réservoir, ladite extrémité inférieure (81) étant placée dans un pot principal (9) ouvert vers le haut caractérisé en ce qu'au moins une conduite additionnelle (10) est prévue entre le réservoir et la surface, avec son extrémité inférieure (12) s'étendant également dans ledit puit principal (9) et soumise à ladite pression déterminée, ladite conduite (10), en condition d'exploitation normale dudit réservoir, étant partiellement remplie avec de l'eau en équilibre de pression de manière à former un joint hydraulique (15) entre le réservoir et surface.

## Description

La présente invention concerne un dispositif de sécurité de réservoirs par formation de joint hydraulique destiné à isoler le réservoir de la surface. Le joint hydraulique, généralement formé par une certaine hauteur d'eau à l'équilibre, n'est réalisé que dans des situations exceptionnelles telles que :
- remontée/descente d'équipements de fond situés dans la colonne d'exploitation,
- détection ou présomption d'une fuite par un orifice sur la colonne d'exploitation concernée,
- éruption non contrôlée du produit stocké vers la surface par la colonne d'exploitation,
- mise en sécurité préventive (risque d'attentat, par exemple).

Ce type de joint hydraulique peut être mis en oeuvre en tant que dispositif de sécurité sur toute sorte de réservoirs comme par exemple les cavités minées, les cavités lessivées ou même des puits de pétrole ou de gaz. Cette technique peut en réalité être utilisée dans tout réservoir pour lequel la pression du produit contenu dans le réservoir peut être équilibrée par une certaine hauteur d'eau, en général en communication avec la pression atmosphérique ou une pression faible. C'est par exemple le cas pour les cavités minées dans lesquelles on stocke du gaz de pétrole liquéfié (GPL) ou du gaz naturel. Pour les réservoirs dans lesquels la pression du produit est particulièrement importante, un tel joint hydraulique ne peut être formé, car la forte pression ne peut être compensée par une colonne d'eau à l'équilibre.

Un tel dispositif de sécurité est notamment décrit dans le document EP-0 214 890, en application à une cavité minée de stockage de GPL dans un massif rocheux imprégné d'eau, la pression hydrostatique au niveau de la cavité étant mise à profit pour équilibrer la pression de liquéfaction du gaz. Une telle cavité peut être pourvue de plusieurs colonnes d'exploitation qui s'étendent à partir de la surface jusque dans la cavité au travers d'un puits d'exploitation rempli d'eau jusqu'au niveau de la nappe phréatique. Ces colonnes ont des fonctions spécifiques telles que l'extraction du GPL, le pompage de l'eau d'exhaure, l'introduction du GPL ou l'évacuation d'éventuelles surpressions dans la cavité. La colonne utilisée pour cette dernière fonction est appelée "tube d'évent" et débouche dans la partie supérieure du réservoir, dans la phase gazeuse.

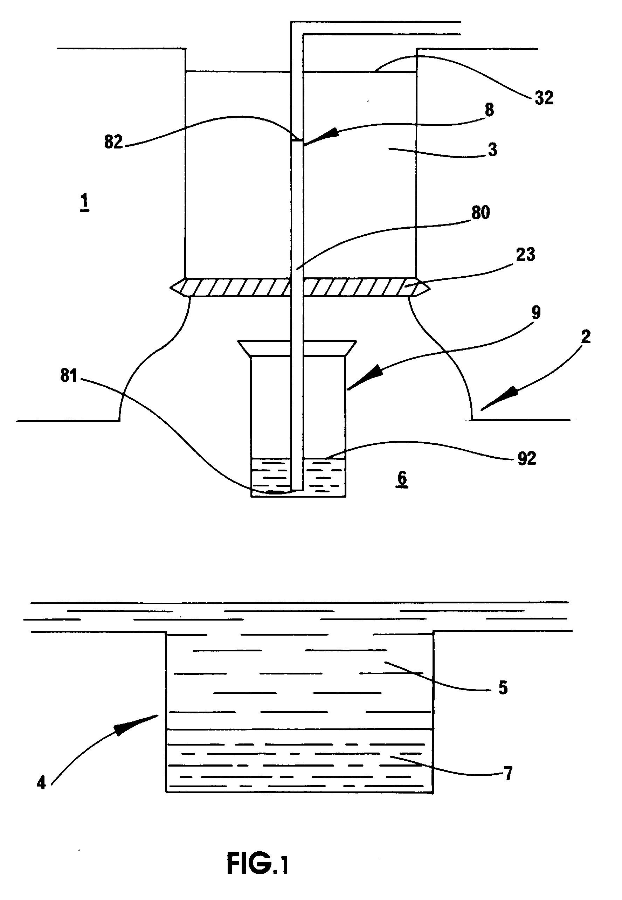

Sur la figure 1 illustrant l'état de la technique telle qu'enseignée par le document précité, il n'a été représenté qu'une colonne d'exploitation dans un but de simplification et de clarté. En l'occurrence la colonne désignée par la référence numérique 8 est un tube d'évent. La cavité désignée dans son ensemble par la référence numérique 2 est creusée par minage dans un massif 1 imprégné d'eau. La cavité est formée avec un puisard 4 dont le fond 7 est partiellement rempli d'eau de percolation ruisselant à l'intérieur de la cavité. L'eau de percolation est surmontée par du produit à l'état liquide 5. Le restant 6 de la cavité est rempli avec le produit en phase gazeuse. La cavité est isolée de la surface par un bouchon cimenté 23 qui est réalisé en extrémité inférieure du puits d'exploitation 3. Ce dernier est rempli avec de l'eau provenant de la nappe phréatique. Le niveau supérieur de l'eau dans le puits correspond donc au niveau de la nappe. La colonne représentée s'étend dans le puits 3 jusque dans la cavité 2, dans sa partie 6 remplie de produit gazeux. L'extrémité inférieure 81 de la colonne est pourvue d'un pot 9 ouvert vers le haut.

En condition d'exploitation normale (non représentée), la colonne est remplie de gaz, ainsi que le pot. Bien entendu, la colonne est dotée d'une vanne d'arrêt (non représentée) pour éviter la sortie du gaz en surface. Si, pour des raisons données ci-dessus, la cavité doit être mise en sécurité, un joint hydraulique peut être formé par injection d'eau depuis la surface à travers la colonne ou, lorsque cela est possible, ce qui n'est pas le cas avec un tube d'évent, par débordement au-dessus du pot, en faisant remonter le niveau de l'eau de percolation 7 dans la cavité. Le niveau supérieur de l'eau 82 du joint hydraulique 80 va se stabiliser à une hauteur qui est fonction de la pression relative s'exerçant sur l'interface eau-produit dans la cavité. Pour une pression de 7 à 8 bars utilisée pour le stockage du propane, une colonne d'eau de 70 à 80 mètres sera nécessaire pour équilibrer la pression dans la cavité. La colonne 8 peut alors rester ouverte à la pression atmosphérique. Le poids seul de la colonne d'eau est suffisant pour créer l'équilibre hydrostatique.

Cependant, cette technique comporte des inconvénients dans certains cas.

Plus particulièrement, en cas d'éruption, la pression et la vitesse d'éjection du fluide stocké peuvent rendre difficile, voire impossible, le remplissage de la colonne en eau.

D'autre part, l'eau ne peut pas être éliminée entièrement du pot par une injection de gaz depuis la surface dans la colonne d'exploitation. Cette impossibilité rend inapplicable la mise en sécurité hydraulique avec cette technique, dans certains cas, et en particulier celui d'un tube d'évent. En effet, dans ce cas, l'eau résiduelle dans le pot va induire une différence significative entre la pression dans la cavité et le tube, inacceptable compte tenu de la fonction à assurer.

Enfin, en cas de rupture ou de percement de la colonne en phase normale d'exploitation, c'est-à-dire sans eau dans la colonne, le produit stocké risque de s'échapper par l'orifice vers le milieu extérieur dans la mesure où celui-ci n'est pas étanche et que la pression qui y règne est inférieure à celle régnant dans la colonne. En particulier, dans le cas des cavités minées où les colonnes traversent un puits d'exploitation rempli d'eau, le produit risque de s'échapper vers l'eau du puits d'exploitation, puis remonter jusqu'en surface à travers le puits.

En fonction du niveau de l'orifice, cette fuite peut se produire soit instantanément, soit après que le puits d'exploitation se soit partiellement vidé jusqu'à atteindre l'équilibre de pression de part et d'autre de l'orifice.

Le principal inconvénient est donc la nécessité, pour arrêter la fuite, d'un dispositif de sécurité indirect déclenchant l'injection d'eau sur détection d'anomalie telle que présence de gaz en surface, variation du niveau d'eau dans le puits, etc. La sécurité n'est donc pas intrinsèque. De plus, si la fuite est importante, il n'est pas exclu de retomber sur l'inconvénient survenant en cas d'éruption.

La présente invention a pour but de supprimer ou de réduire les inconvénients de l'art antérieur en définissant un dispositif de sécurité intrinsèque qui puisse être mis en action rapidement dans tous les cas de figure.

Pour ce faire, l'invention a pour objet un dispositif de sécurité pour réservoirs souterrains naturels ou creusés contenant un produit gazeux ou liquide maintenu sous une pression déterminée, ledit réservoir étant situé à une profondeur telle que ladite pression déterminée peut être équilibrée par une certaine hauteur d'eau, ledit réservoir communiquant avec la surface contenant au moins une colonne d'exploitation présentant une extrémité inférieure s'étendant dans le réservoir, ladite extrémité inférieure étant placée dans un pot principal ouvert vers le haut, caractérisé en ce qu'au moins une conduite additionnelle reliant également le réservoir à la surface est prévue, avec son extrémité inférieure s'étendant également dans ledit pot principal et soumise à ladite pression déterminée, ladite conduite, en condition d'exploitation normale dudit réservoir, étant partiellement remplie avec de l'eau en équilibre de pression de manière à former un joint hydraulique entre le réservoir et la surface. Ainsi, en cas d'incident sur la colonne d'exploitation, tel qu'une éruption, l'eau est injectée dans le pot principal par l'intermédiaire de la conduite additionnelle qui est déjà en équilibre. Il n'est ainsi plus nécessaire d'injecter l'eau contre la pression d'éjection du produit. Comme la conduite est déjà à l'équilibre, la pression nécessaire pour injecter de l'eau est très faible, à peine supérieure à la pression atmosphérique.

Selon une première forme de réalisation, la conduite additionnelle associée à ladite au moins une colonne d'exploitation s'étend de manière adjacente à ladite colonne. Ainsi, pour chaque colonne peut être prévue une conduite additionnelle qui s'étend à côté de la colonne respective.

Selon une seconde forme de réalisation avantageuse, la conduite additionnelle associée à ladite au moins une colonne d'exploitation s'étend de manière concentrique à ladite colonne en formant un tubage interne et un annulaire externe. De préférence, le produit gazeux ou liquide, en condition d'exploitation normale, est présent dans le tubage interne, alors que le joint hydraulique est formé dans l'annulaire externe. Cette caractéristique additionnelle offre plusieurs avantages qui se manifestent plus particulièrement en cas de rupture ou de percement lorsqu'il existe un risque de fuite vers le milieu extérieur. En effet, en cas de rupture de la conduite additionnelle qui forme le tube externe, le produit reste confiné dans le tubage interne. En cas de rupture du tubage interne seul, le produit reste confiné dans l'annulaire. Enfin, en cas de rupture simultanée des deux tubes si la colonne est immergée dans un puits d'exploitation rempli d'eau, la mise en sécurité est automatique par déversement de l'eau du puits dans l'annulaire (ce qui est possible car il est en équilibre) et montée de l'eau dans le tubage du fait de sa dépressurisation. L'annulaire rempli d'eau joue donc le rôle de couche de protection pour le tubage interne rempli de produit liquide ou gazeux. D'autre part, en cas de rupture simultanée si la colonne est immergée dans un puits d'exploitation rempli d'eau, le produit en éruption n'empêche pas l'eau du puits de se déverser dans l'annulaire, ce qui serait peut-être le cas dans une configuration dans laquelle le produit serait dans l'annulaire et le joint dans le tubage interne.

Selon une caractéristique de l'invention, ladite conduite est pourvue à son extrémité inférieure d'un pot additionnel ou d'un siphon placé dans ledit pot principal, de manière à pouvoir déborder dans le pot principal.

Selon une caractéristique préférentielle, l'extrémité inférieure de la colonne d'exploitation est située à un niveau supérieur à celui de l'extrémité inférieure de la conduite additionnelle. Dans le cas de conduites concentriques avec le produit dans l'annulaire et le joint dans le tubage interne, l'extrémité inférieure du tubage interne est située à un niveau inférieur à celui de l'annulaire externe. Dans la configuration où le joint est dans l'annulaire et le produit dans le tubage interne, l'extrémité inférieure de ce dernier est aménagée de manière à ce que le niveau où elle débouche dans le pot soit au-dessus du niveau de l'extrémité inférieure du tube externe. On n'a plus besoin du pot additionnel : le même pot est utilisé pour les deux tubes concentriques en jouant sur le niveau d'eau dans le pot. Il suffit, en condition d'exploitation normale, de ramener le niveau en dessous de l'extrémité inférieure de la colonne contenant le produit stocké.

L'invention sera plus amplement décrite en référence aux dessins annexés donnant à tire d'exemple non limitatif plusieurs modes de réalisation de l'invention.

Sur les dessins :
- la figure 1 est une vue en coupe au travers d'un site accueillant une cavité pourvue d'une colonne située dans un puits d'exploitation dotée d'un dispositif de sécurité selon l'art antérieur,
- la figure 2 est une vue en coupe d'une partie d'un réservoir doté d'un dispositif de sécurité selon l'invention en condition normale d'exploitation,
- la figure 3 est une vue en coupe du dispositif de la figure 2 en condition de sécurité,
- la figure 4 est une vue en coupe d'une partie d'un réservoir doté d'un dispositif de sécurité de l'invention selon une deuxième forme de réalisation,
- la figure 5 est une vue en coupe d'une partie d'un réservoir doté d'un dispositif de sécurité selon l'invention selon une troisième forme de réalisation,
- la figure 6 est une vue en coupe d'une partie d'un réservoir doté d'un dispositif de sécurité selon l'invention selon une quatrième forme de réalisation,
- la figure 7 est une vue en coupe d'une partie d'un réservoir doté d'un dispositif de sécurité de l'invention selon une cinquième forme de réalisation,
- la figure 8 est une vue en coupe d'une partie d'un réservoir doté d'un dispositif de sécurité de l'invention selon une sixième forme de réalisation, et
- les figures 8a à 8d sont des vues en coupe de la sixième forme de réalisation illustrant les phases successives pour mettre le réservoir en sécurité.

Sur les différentes figures visant à illustrer l'invention, le site accueillant le réservoir n'a pas été représenté dans sa totalité. Uniquement une partie du réservoir comprenant une colonne d'exploitation 8 a été représentée dans le but de simplifier et de clarifier l'invention. Le réservoir illustré est plutôt du type cavité minée, puisque le réservoir comprend un puits d'exploitation 3 obturé par un bouchon 23. Ainsi, la colonne 8 au-dessus du bouchon 23 est située dans le puits d'exploitation 3 et la partie de colonne 8 située au-dessous du bouchon 23 se trouve dans le réservoir. Le fait d'illustrer l'invention en relation avec une cavité minée n'est qu'un choix non limitatif. Bien entendu, la présente invention peut également être mise en oeuvre avec des cavités lessivées, des puits de pétrole ou de gaz. La seule condition nécessaire pour que la présente invention puisse être mise en oeuvre sur un réservoir est que la pression régnant à l'intérieur du réservoir soit telle qu'elle puisse être équilibrée par une certaine hauteur d'eau dans une colonne verticale. L'eau en équilibre joue le rôle d'un joint hydraulique dont l'extrémité supérieure est en relation avec la pression atmosphérique ou une pression approchée. Par exemple, pour un réservoir ayant une pression de 8 bars, une colonne d'eau d'environ 80 mètres est nécessaire pour équilibrer la pression. il faut donc que la colonne soit suffisamment longue pour contenir la colonne d'eau verticale.

Alors que dans l'art antérieur l'eau pour former le joint était injecté par la colonne d'exploitation 8 elle-même, la présente invention prévoit une conduite additionnelle désignée par la référence numérique 10 qui est remplie avec de l'eau en équilibre de pression. Le joint hydraulique 15 présent dans la conduite additionnelle 10 est maintenu en condition normale d'exploitation du réservoir. La conduite additionnelle 10 présente une extrémité supérieure 14 en relation avec la pression atmosphérique P₀ et une extrémité inférieure 12 débouchant dans le réservoir et soumise à la pression P₁ régnant dans le réservoir. Le joint hydraulique présente donc un niveau supérieur 13 et un niveau inférieur 12 séparés par une hauteur H dépendante de la pression régnant dans le réservoir. Dans tous les modes de réalisation, l'extrémité inférieure 12 de la conduite additionnelle 10 est déplacée dans un pot principal 9 situé dans le réservoir. Le pot principal 9 sert à contenir de l'eau qui servira à former le joint hydraulique dans la colonne d'exploitation 8. En condition normale d'exploitation, le pot est partiellement vide, de telle manière que l'extrémité inférieure 81 de la colonne d'exploitation 8 ne soit pas immergée dans l'eau.

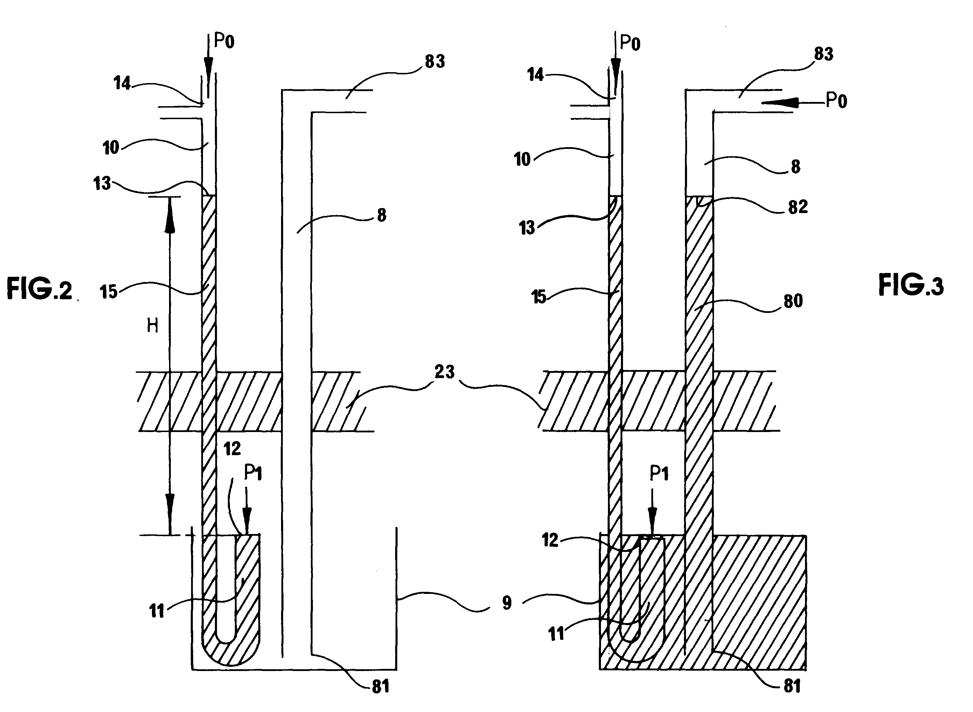

En se référant maintenant aux figures 2 et 3, on a représenté une première forme de réalisation du dispositif de sécurité selon l'invention. Dans cette forme de réalisation, la conduite additionnelle 10 s'étend de manière adjacente à la colonne d'exploitation 8. Les deux colonnes 8 et 10 s'étendent donc parallèlement l'une à l'autre en traversant le bouchon 23 en deux endroits séparés d'une certaine distance. Les deux extrémités respectives 81 et 12 de la colonne 8 et de la conduite 10 sont placées dans le pot principal 9. La conduite 10 contient un joint hydraulique 15 en équilibre de pression avec la pression P₁ régnant dans la cavité. L'extrémité supérieure 14 de la conduite additionnelle 10 est ouverte à la pression atmosphérique P₀. En condition normale d'exploitation représentée sur la figure 2, la colonne 8 est remplie de produit gazeux ou liquide, c'est pourquoi son extrémité supérieure 83 doit être dotée d'une vanne d'arrêt (non représentée). La colonne 8 est donc pressurisée à la pression P₁. Dans cet état, le pot principal 9 est vide d'eau. Par contre, il peut contenir du produit en phase gazeuse ou liquide. Afin de mettre la colonne d'exploitation 8 en condition de sécurité, de l'eau est injectée par l'extrémité 14 à travers la conduite additionnelle 10. Lorsqu'on injecte de l'eau dans la conduite 10, le niveau supérieur 13 reste cependant sensiblement constant et l'eau injectée se déverse par l'extrémité inférieure 12 dans le pot principal 9. Etant donné que la colonne d'exploitation 8 reste pressurisée, l'eau du pot principal ne peut pas pénétrer à l'intérieur de son extrémité inférieure 81. L'injection d'eau à travers la conduite additionnelle 10 doit être poursuivie jusqu'à ce qu'une quantité suffisante d'eau soit comprise dans le pot principal 9 pour remplir la colonne d'exploitation 8 jusqu'au niveau correspondant à l'équilibre de pression. Une fois cette quantité d'eau suffisante injectée dans le pot principal 9, la colonne d'exploitation 8 peut être dépressurisée, de sorte que l'eau présente dans le pot remonte dans la colonne 8 jusqu'au niveau 82. Une autre technique alternative pour la formation du joint hydraulique 80 dans la colonne d'exploitation 8 serait de dépressuriser par paliers la colonne 8 à mesure que l'eau est injectée par la conduite additionnelle 10. Ainsi, la capacité du pot principal peut être réduite.

Dans cette première forme de réalisation, la colonne additionnelle 10 est pourvue à proximité de son extrémité inférieure d'un siphon ou coude 11, l'extrémité de la conduite 12 étant située en extrémité du coude ou siphon 11. Ce siphon 11 permet de compenser les variations de pression P₁ à l'intérieur de la cavité. En l'absence de siphon 11, une légère variation de la pression P₁ aurait pour conséquence une fuite de produit gazeux ou liquide au travers de la conduite additionnelle 10 qui est relié à l'atmosphère. C'est pourquoi le niveau de l'eau dans le siphon 11 doit être maximum. Une fois que le joint hydraulique 80 est formé dans la colonne d'exploitation 8, il est possible de remplir le pot principal de manière maximale. On élimine ainsi tout risque de fuite de produit par l'extrémité inférieure 81 de la colonne 8.

Avec cette forme de réalisation, il est cependant nécessaire de prévoir une unité de pompage pour pomper l'eau du pot principal afin de revenir en condition normale d'exploitation. En effet, il n'est pas possible de rabattre le niveau d'eau dans le pot principal 9 en-dessous de l'extrémité inférieure 81 de la colonne 8 simplement par injection de produit gazeux par les extrémités supérieures 14 et 83 de la conduite 10 et de la colonne 8 respectivement. L'eau doit par conséquent être rabattue par pompage à l'aide d'une unité de pompage (non représentée).

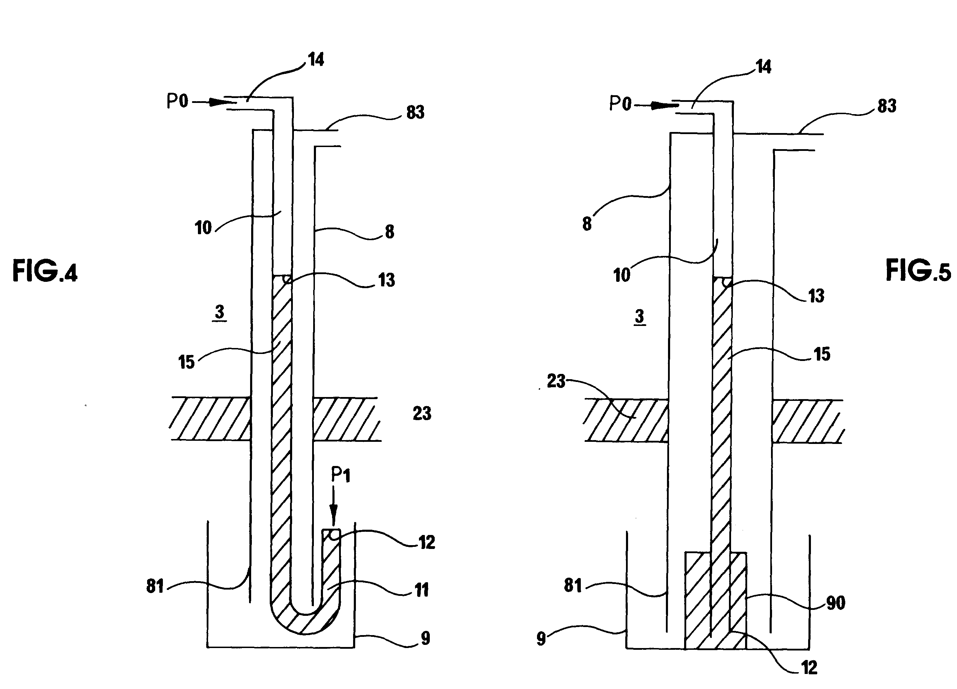

Les figures 4 à 8 représentent chacune une forme de réalisation différente qui présente cependant une caractéristique commune. En effet, dans toutes ces formes de réalisation, la conduite 10 et la colonne 8 sont disposées de manière concentrique de sorte qu'un annulaire est formé entre le tubage interne et le tubage externe.

Sur la figure 4, la conduite d'exploitation 8 forme le tubage externe alors que la conduite additionnelle 10 est disposée de manière concentrique à l'intérieur et forme donc le tubage interne. L'extrémité supérieure de la conduite additionnelle 10 est ouverte à la pression atmosphérique P₀ alors que l'extrémité inférieure 12 est soumise à la pression P₁ régnant dans la cavité. Comme dans la première forme de réalisation, la conduite additionnelle 10 est pourvue d'un siphon 11. Le siphon 11 et l'extrémité inférieure 81 de la colonne d'exploitation 8 sont placées dans le pot principal 9. Pour la mise en sécurité de la colonne d'exploitation 8, la même procédure opérationnelle que dans la première forme de réalisation peut être suivie. L'eau est injectée par l'extrémité supérieure 14 de la colonne additionnelle 10 dans le pot principal 9 jusqu'à ce qu'une quantité suffisante d'eau soit présente dans le pot 9. La colonne 8 peut alors être dépressurisée de sorte que l'eau contenue dans le pot 9 remonte dans la colonne 8 jusqu'au niveau 13. Le joint hydraulique est alors formé, mettant la colonne 8 en sécurité. La démarche alternative précédemment citée consiste à dépressuriser la colonne 8 en même temps que l'eau est injectée dans le pot 9 à travers la conduite 10.

En se référant maintenant à la figure 5, la seule différence de construction avec la deuxième forme de réalisation réside dans le fait que l'extrémité inférieure de la colonne 10 est pourvue d'un pot additionnel 90. L'extrémité inférieure 12 de la colonne 10 est donc placée dans ce pot additionnel 90. En outre, le pot additionnel 90 est placé dans le pot principal 9 dans lequel pénètre également l'extrémité inférieure 81 de la colonne d'exploitation 8. Cette troisième forme de réalisation met donc en oeuvre deux pots placés l'un dans l'autre. Le pot additionnel 90 joue en réalité le même rôle que le siphon 11 dans les formes de réalisation des figures 2, 3 et 4, c'est-à-dire qu'il permet de compenser des variations de pression P₁ régnant dans la cavité.

Il est à noter que dans les formes de réalisation des figures 4 et 5, la colonne d'exploitation 8 est située à l'extérieur et la conduite additionnelle à l'intérieur. Par conséquent, le produit gazeux ou liquide est présent dans l'annulaire alors que le joint hydraulique permanent 15 est présent dans le tubage interne. Le fait que le produit soit présent dans l'annulaire peut poser certains problèmes particulièrement en cas d'éruption provenant de la rupture de la colonne 8 dans le secteur située à l'intérieur du puits d'exploitation 3. En effet, dans un tel cas, l'eau du puits d'exploitation 3 ne pourrait que très difficilement pénétrer dans l'annulaire 8 du fait de la pression et de la vitesse d'éruption du produit. De ce fait, le colonne d'exploitation 8 ne pourrait pas être mise en sécurité en cas de rupture. En revanche, la colonne d'exploitation 8 peut être très facilement mise en sécurité pour des opérations de maintenance du pot ou de l'unité de pompage immergée par exemple.

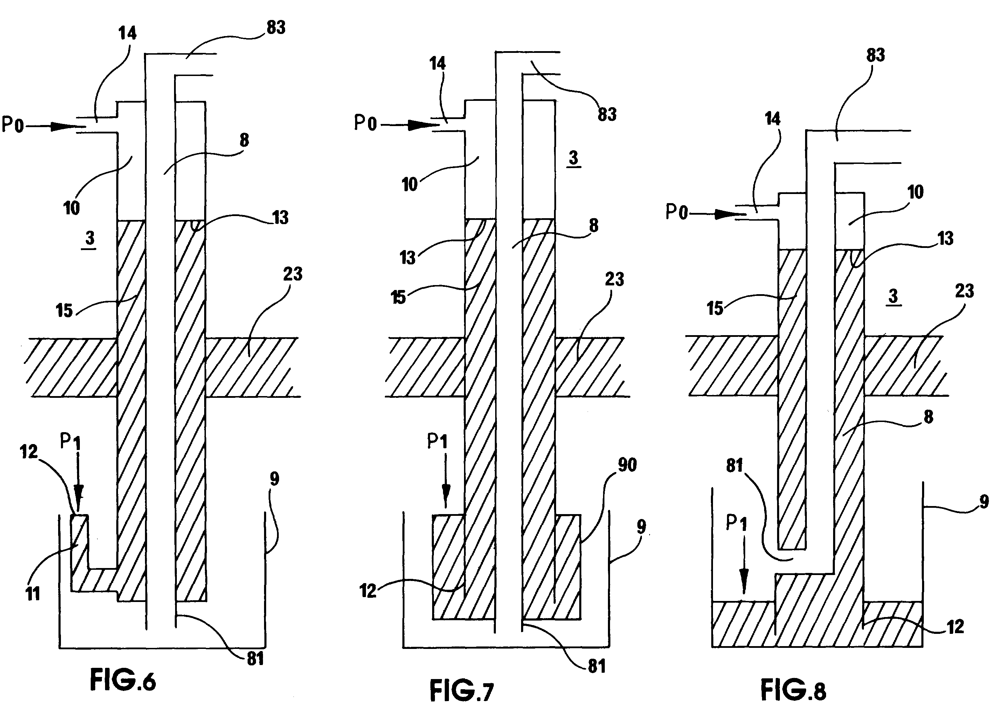

Les figures 6, 7 et 8 représentent toutes des configurations de colonne 8 et de conduite 10 disposées de manière concentrique. Cependant, une différence essentielle avec les formes de réalisation des figures 4 et 5 réside dans le fait que le joint hydraulique permanent 15 est formé dans l'annulaire alors que la colonne d'exploitation 8 forme le tubage interne dans lequel le produit gazeux ou liquide est présent.

Le dispositif de sécurité représenté sur la figure 6 est à mettre en analogie avec celui représenté sur la figure 4, en ce sens que le conduit additionnel 10 est pourvu d'un siphon 11 à son extrémité inférieure. Quant au dispositif représenté sur la figure 7, il est à mettre en analogie avec celui représenté sur la figure 5, en ce sens qu'un pot additionnel est prévu à l'extrémité inférieure de la conduite additionnelle 10. L'extrémité inférieure 12 de la conduite 10 est bien entendu placée dans le pot additionnel 90 alors que la colonne d'exploitation 8 traverse le fond du pot additionnel 90 pour déboucher à proximité du fond du pot principal 9. De plus, le pot additionnel 90 est formé de telle sorte qu'il puisse déborder dans le pot principal 9. Pour la formation du joint hydraulique 80 dans la colonne d'exploitation 8, il suffit d'injecter de l'eau par l'extrémité supérieure 14 de la conduite additionnelle 10, de manière à remplir le pot principal 9. Ensuite, la colonne d'exploitation 8 doit être dépressurisée de manière à faire remonter l'eau du pot 9 dans la colonne 8. L'eau de la colonne 8 remonte jusqu'au niveau de l'eau 13 dans la conduite 10. La colonne d'exploitation 8 est ainsi mise en sécurité.

Cependant, comme précédemment énoncé, pour remettre la colonne 8 en condition d'exploitation normale, il est nécessaire de prévoir une unité de pompage afin que l'extrémité inférieure 81 de la colonne 8 ne soit plus immergée dans de l'eau. En effet, la seule injection de produit gazeux à partir de l'extrémité supérieure 14 et 83 de la conduite 10 et de la colonne 8 ne suffit pas à rabattre le niveau de l'eau dans le pot 9 en-dessous de l'extrémité inférieure 81 de la colonne 8.

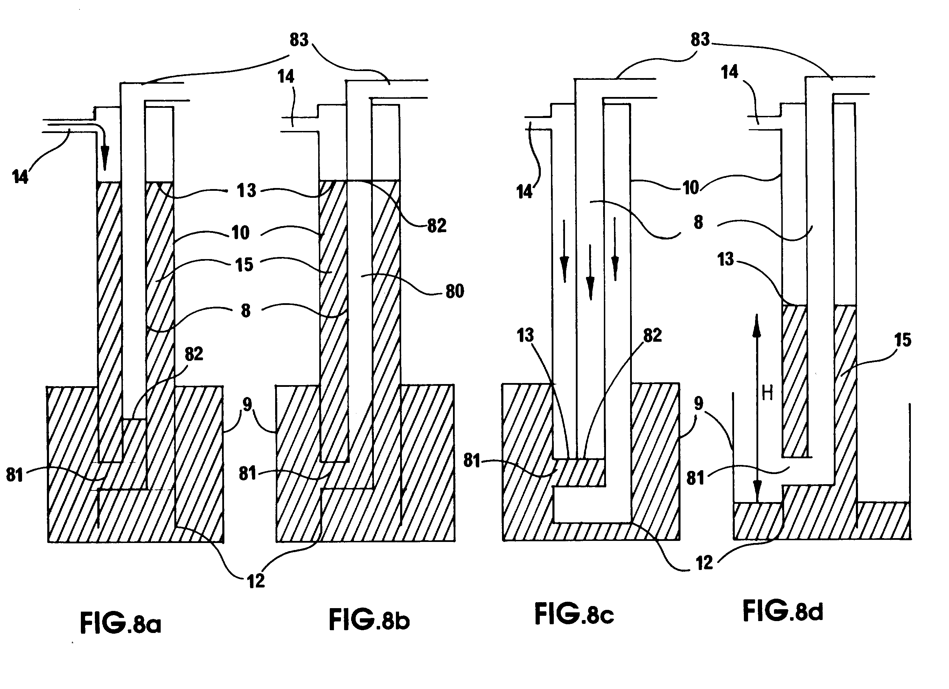

Ce problème de remise en condition normale d'exploitation est résolu par le dispositif de sécurité représenté sur la figure 8. Tout comme les formes de réalisation représentées sur les figures 6 et 7, le joint hydraulique permanent 15 formé dans la conduite additionnelle 10 est situé dans l'annulaire alors que le produit est situé dans la colonne d'exploitation 8 formant le tubage interne. Toutefois, l'extrémité inférieure de la colonne d'exploitation 8 est située à un niveau supérieur à celle du conduit additionnel 10. En effet, l'extrémité inférieure 12 est située à proximité du fond du pot principal 9 alors que l'extrémité 81 de la colonne 8 est située bien au-dessus et débouche de manière latérale. On peut bien entendu imaginer une autre configuration pour l'ouverture 81 de la colonne d'exploitation 8 dans laquelle cette ouverture qui est celle du tubage interne débouche à un niveau supérieur à celle de l'annulaire 10. Il est également à noter que dans cette forme de réalisation, il n'y a plus de pot additionnel 90. En effet, on peut dire que le pot additionnel 90 est directement intégré dans l'extrémité inférieure 12 de la conduite additionnelle 10. Ainsi, on peut se passer d'un pot supplémentaire.

En se référant maintenant aux figures 8a à 8d, on va expliquer de quelle manière il est possible de former un joint hydraulique 80 dans la colonne d'exploitation 8, et de revenir à la condition d'exploitation normale sans pour cela utiliser d'unité de pompage pour rabattre le niveau de l'eau de manière suffisante dans le pot principal 9. La figure 8 représente le dispositif de sécurité en condition normale d'exploitation. Le niveau de l'eau dans le pot principal 9 est situé en-dessus de l'extrémité inférieure 81 de la colonne 8. Ainsi, le produit liquide ou gazeux peut passer dans la colonne 8. Tout comme les autres formes de réalisation précédemment décrites, pour former le joint hydraulique 80 dans la colonne 8, il est nécessaire d'injecter de l'eau par l'extrémité supérieure 14 dans la conduite additionnelle 10. De l'eau peut par exemple être injectée par la colonne 10 jusqu'à ce que le niveau d'eau dans le pot atteigne le bord supérieur du pot. Le pot contient alors sa capacité maximale. L'eau ne peut pas pénétrer dans la colonne d'exploitation 8 étant donné qu'elle est encore pressurisée à la pression P1. Pour laisser remonter l'eau dans la colonne d'exploitation 8, il suffit d'ouvrir la vanne d'arrêt (non représentée) située à l'extrémité supérieure 83 de la colonne. L'eau va monter dans la colonne jusqu'à un niveau 82 identique au niveau 13 dans la conduite 10. On peut ensuite faire le complément en eau dans le pot toujours en injectant de l'eau par l'extrémité supérieure 14 de la conduite 10. On se retrouve alors dans la situation représentée sur la figure 8b. Le pot 9 est complètement rempli et la conduite 10 et la colonne 8 contiennent chacune un joint hydraulique 15, 80 en équilibre de pression. Une autre technique alternative peut également être utilisée pour former le joint hydraulique 80 dans la colonne 8 : la colonne 8 peut être dépressurisée à mesure que l'eau est injectée dans la colonne 10. Cela permet de réduire la capacité du pot 9. En effet, en employant la première technique consistant à dépressuriser la colonne 8 seulement après remplissage complet du pot 9, il est possible que du gaz ou du liquide puisse pénétrer dans la colonne 8 par l'extrémité inférieure 81 au cas où le pot a été dimensionné de manière trop petite. En employant la seconde technique, on assure que le niveau dans le pot est sensiblement constant étant donné que l'eau monte dans la colonne 8 en même temps que de l'eau est injectée dans la conduite 10 par l'extrémité supérieure 14. Cette seconde technique peut donc être considérée comme préférentielle, particulièrement du point du vue de la sécurité.

Une fois que le joint hydrostatique 80 a été formé dans la colonne 8, la cavité est isolée de la surface. Cet état peut être maintenu aussi longtemps que souhaité, étant donné qu'il s'agit d'un état d'équilibre.

Lorsque l'on veut remettre la colonne 8 en condition normale d'exploitation, il suffit d'injecter du gaz ou du produit par l'extrémité supérieure 14, de la conduite 10 et l'extrémité supérieure 83 de la colonne 8. L'injection de gaz est représentée par les flèches descendantes. L'injection de gaz a pour effet de rabattre le niveau d'eau dans la colonne d'exploitation 8 jusqu'au niveau inférieur désigné par la référence numérique 82. Parallèlement, l'eau est rabattue dans la conduite additionnelle 10 jusqu'à son extrémité inférieure ouverte 12. L'eau chassée par l'injection de gaz dans la conduite 10 et dans la colonne 8 déborde du pot 9 pour tomber au fond de la cavité, par exemple dans le puisard. Le pot est alors à sa contenance maximale, hormis que les parties de colonne et de conduite immergées dans le pot sont vides d'eau. Cette situation est représentée sur la figure 8c.

La dernière opération nécessaire pour remettre la colonne 8 en condition normale d'exploitation consiste à stopper l'injection de gaz dans la conduite 10 et à remettre son extrémité supérieure 14 à la pression atmosphérique. Ceci a pour effet de faire remonter l'eau contenue dans le pot 9 dans la conduite additionnelle 10 jusqu'au niveau d'équilibre de pression 13. En dimensionnant le pot 9 de manière adaptée, il est possible de rabattre le niveau de l'eau dans le pot 9 en dessous de l'extrémité 81 de la colonne 8. Ainsi, l'extrémité 81 est à nouveau en communication avec le produit, seule l'extrémité 12 de la conduite 10 restant immergée. Cette eau restant au fond du pot 9 n'est pas gênante pour l'exploitation par la colonne 8.

On voit ainsi de quelle manière le positionnement des extrémités inférieures 81 et 12 de la colonne et de la conduite permet de se passer d'une unité de pompage. Ainsi, la simple vidange en eau de la colonne 8 et de la conduite 10 suffit pour revenir en condition normale d'exploitation. Le rabattage du niveau de l'eau dans le pot 9 s'effectue maintenant automatiquement sans besoin d'utiliser une quelconque unité de pompage.

De plus, un autre avantage, également présent dans les formes de réalisation des figures 6 et 7, réside dans le fait que le joint hydraulique permanent 15 est formé dans l'annulaire et non pas dans le tubage interne. En effet, en cas de rupture de la conduite 10 et de la colonne 8 dans le puits d'exploitation rempli d'eau provenant de la nappe phréatique, l'eau du puits 3 n'est pas empêchée de descendre dans la conduite annulaire 10 par le produit gazeux ou liquide éjecté par le tubage central cassé sous l'effet de pression P₁ régnant dans la cavité. Dès que l'eau descendant dans la conduite additionnelle 10 a atteint un niveau supérieur à celui de l'extrémité 81 de la colonne 8 dans le pot 9, le produit gazeux ou liquide n'est plus éjecté par la colonne 8. L'eau descendant par la colonne 10 en provenance du puits d'exploitation 3 s'engouffre directement dans la colonne 8 pour former le joint hydraulique 80. En cas de rupture, la colonne 8 est mise en sécurité automatiquement sans intervention extérieure.

Ainsi, grâce à l'invention, et en particulier dans sa forme de réalisation représentée sur la figure 8, une colonne d'exploitation peut être mise en sécurité de manière simple et rapide pour effectuer des interventions sur le pot par exemple, mais surtout, la colonne se met en sécurité automatiquement en cas de rupture. De plus, il n'est pas nécessaire de disposer d'une unité de pompage pour la vidange du pot 9. Tous ces avantages sont fournis par une colonne double de conception relativement simple.

## Revendications

1. Dispositif de sécurité pour réservoirs souterrains naturels ou creusés contenant un produit gazeux ou liquide maintenu sous une pression déterminée, ledit réservoir étant situé à une profondeur telle que ladite pression déterminée peut être équilibrée par une certaine hauteur d'eau, ledit réservoir communiquant avec la surface par au moins une colonne d'exploitation présentant une extrémité inférieure (81) s'étendant dans le réservoir, ladite extrémité inférieure (81) étant placée dans un pot principal (9) ouvert vers le haut, caractérisé en ce qu'au moins une conduite additionnelle (10) est prévue entre le réservoir et la surface, avec son extrémité inférieure (12) s'étendant également dans ledit pot principal (9) et soumise à ladite pression déterminée, ladite conduite (10), en condition d'exploitation normale dudit réservoir, étant partiellement remplie avec de l'eau en équilibre de pression de manière à former un joint hydraulique (15) entre le réservoir et la surface.

2. Dispositif de sécurité selon la revendication 1, dans lequel la conduite additionnelle (10) associée à ladite au moins une colonne d'exploitation (8) s'étend de manière adjacente à ladite colonne.

3. Dispositif de sécurité selon la revendication 1, dans lequel la conduite additionnelle (10) associée à ladite au moins une colonne d'exploitation (8) s'étend de manière concentrique à ladite colonne en formant un tubage interne (8 ou 10) et un annulaire externe (10 ou 8).

4. Dispositif de sécurité selon la revendication 1, 2 ou 3, dans lequel ladite conduite (10) est pourvue à son extrémité inférieure (12) d'un pot additionnel (90) placé dans ledit pot principal (9), de manière à pouvoir déborder dans le pot principal.

5. Dispositif de sécurité selon la revendication 1, 2 ou 3, dans lequel ladite conduite (10) est pourvue à son extrémité inférieure (12) d'un siphon (11) placé dans ledit pot principal (9) de manière à pouvoir déborder dans le pot principal.

6. Dispositif de sécurité selon la revendication 3, dans lequel le produit gazeux ou liquide, en condition d'exploitation normale, est présent dans le tubage interne (8), alors que le joint hydraulique (15) est formé dans l'annulaire externe (10).

7. Dispositif de sécurité selon la revendication 1, dans lequel l'extrémité inférieure de la colonne (8) est située à un niveau supérieur à celui de l'extrémité inférieure (12) de la conduite (10).

8. Dispositif de sécurité selon la revendication 6, dans lequel l'extrémité inférieure du tubage interne (8) est située à un niveau inférieur à celui de l'annulaire externe (10).

9. Dispositif de sécurité selon la revendication 7 ou 8, dans lequel l'extrémité inférieure (12) de la conduite additionnelle (10) est située à proximité du fond du pot principal (9).

10. Dispositif de sécurité selon l'une quelconque des revendications précédentes, dans lequel l'extrémité supérieure (14) de la conduite additionnelle (10) est placée à la pression atmosphérique.
